# EUROPÄISCHE PATENTANMELDUNG

(11) **EP 2 597 327 A2**
(43) Veröffentlichungstag der Anmeldung: **29.05.2013**
(21) Anmeldenummer: 12193600.9
(22) Anmeldetag: 21.11.2012
(51) Int. Cl.: F16D 11/14

(54) **Verfahren zum Herstellen einer Losradanordnung**

(30) Priorität: 23.11.2011 DE 102011119575
(71) Anmelder: GETRAG Getriebe- und Zahnradfabrik Hermann Hagenmeyer GmbH & Cie KG, 74199 Untergruppenbach (DE)
(72) Erfinder: Sojka, Jürgen, 74523 Schwäbisch Hall (DE); Marx, Thomas, 74369 Löchgau (DE)
(74) Vertreter: Witte, Weller & Partner

(57) **Zusammenfassung**

Verfahren zum Herstellen eine Losradanordnung (10) für eine Schaltkupplungsanordnung (40), wobei die Losradanordnung (10) ein Losrad (12) mit einer Losradverzahnung (14) sowie einen Kupplungskörper (22) mit einer Kupplungskörperverzahnung (24) aufweist, und wobei die Losradanordnung (10) wenigstens eine Axialvertiefung (34) zur Aufnahme eines Abschnittes (58) eines Ringelementes (56) der Schaltkupplungsanordnung (40) aufweist, mit den Schritten, einen Losradrohling und eine Kupplungskörperanordnung bereitzustellen, eine Axialvertiefung in den Losradrohling einzubringen und die Kupplungskörperanordnung an dem Losradrohling festzulegen (Fig. 1).

## Beschreibung

Die vorliegende Erfindung betrifft ein Verfahren zum Herstellen einer Losradanordnung für eine Schaltkupplungsanordnung, insbesondere für Kraftfahrzeuggetriebe, wobei die Losradanordnung ein Losrad mit einer Losradverzahnung sowie einen Kupplungskörper mit einer Kupplungskörperverzahnung aufweist, und wobei die Losradanordnung wenigstens eine Axialvertiefung zur Aufnahme eines Abschnittes eines Ringelementes der Schaltkupplungsanordnung aufweist.

Ferner betrifft die vorliegende Erfindung ein Verfahren zum Herstellen einer Schaltkupplungsanordnung, die einen Konusring mit einer Reibfläche und wenigstens einem axial vorstehenden Vorsprung sowie eine Losradanordnung mit einem Kupplungskörper aufweist, wobei die Losradanordnung wenigstens eine Axialvertiefung aufweist, mit den Schritten, eine Losradanordnung herzustellen und anschließend den Vorsprung in die Axialvertiefung einzusetzen, um die Losradanordnung und den Konusring in Umfangsrichtung formschlüssig miteinander zu verbinden.

Schließlich betrifft die vorliegende Erfindung eine derartige Losradanordnung sowie eine Schaltkupplungsanordnung mit einer solchen Losradanordnung.

Auf dem Gebiet der Kraftfahrzeuggetriebe dienen Schaltkupplungsanordnungen dazu, eine an einer Welle drehbar gelagerte Losradanordnung entweder drehfest mit der Welle zu verbinden, oder die drehfeste Verbindung dazwischen aufzuheben. Mittels derartiger Schaltkupplungsanordnungen werden beispielsweise Gangstufen in Kraftfahrzeuggetrieben ein- und ausgelegt.

Obgleich derartige Schaltkupplungsanordnungen generell als Klauenkupplungen ausgebildet sein können, sind die Schaltkupplungsanordnungen vorzugsweise als Synchron-Schaltkupplungen ausgebildet. Hierbei beinhaltet die Schaltkupplungsanordnung eine Reibeinrichtung, um vor einem Verbinden der Losradanordnung mit der Welle deren Drehzahlen aneinander anzugleichen. Hierzu weist die Schaltkupplungsanordnung in der Regel einen Synchronring mit einem ersten Reibabschnitt auf, wobei der Synchronring drehfest (oder begrenzt verdrehbar) mit der Welle verbunden ist, beispielsweise über eine Führungsmuffe. Ferner ist mit der Losradanordnung ein weiterer Reibabschnitt drehfest verbunden, der mit dem ersten Reibabschnitt in Reibeingriff steht, um die Drehzahlsynchronisation zu erzielen.

In manchen Ausführungsformen ist der weitere Reibabschnitt dabei an einem Konusabschnitt des Kupplungskörpers ausgebildet. Bei sogenannten "gesteckten" Synchron-Schaltkupplungen ist hingegen ein Konusring als von dem Kupplungskörper separates Bauelement vorgesehen, wobei der Konusring in der Regel eine Mehrzahl von Vorsprüngen aufweist, die in entsprechende Axialvertiefungen (Taschen) der Losradanordnung in axialer Richtung eingesteckt werden, um eine in Umfangsrichtung (Drehrichtung) formschlüssige Verbindung zwischen dem Konusring und der Losradanordnung zu erzielen.

Synchron-Schaltkupplungen sind dabei in Form von sogenannten Monokegelsynchronisierungen sowie in Form von sogenannten Mehrfachkegelsynchronisierungen bekannt.

Die Losradverzahnung des Losrads steht in der Regel mit einem zugeordneten Festrad in Eingriff, das drehfest an einer weiteren Welle festgelegt ist. Die Kupplungskörperverzahnung ist auf eine Verzahnung einer sogenannten Schaltmuffe abgestimmt, die in axialer Richtung begrenzt verschieblich an einer mit der Welle fest verbundenen Führungsmuffe ausgebildet ist. Zum drehfesten Verbinden der Welle und des Losrades wird die Schaltmuffe in axialer Richtung versetzt, derart, dass die Schaltmuffenverzahnung mit der Kupplungskörperverzahnung in Eingriff tritt.

Zur Herstellung derartiger Losradanordnungen sind dabei im Wesentlichen zwei Varianten bekannt. Bei der einen Variante wird der Kupplungskörper separat von dem Losrad hergestellt und an dem Losrad montiert, beispielsweise über eine Steckverbindung oder über eine Schweißverbindung. Dabei werden in dem Kupplungskörper vorab Axialvertiefungen (beispielsweise in Form von axialen Durchgangslöchern) ausgebildet. Die axialen Taschen können dabei radial nach innen offen sein. Die Herstellung von Kupplungskörpern mit derartigen Taschen ist jedoch vergleichsweise kostenaufwändig. Ein weiterer Nachteil besteht darin, dass der Verbindungsdurchmesser zwischen dem Kupplungskörper und dem Losrad relativ gesehen klein ist, so dass diese Ausführungsform bei einigen Getriebeapplikationen nicht anwendbar ist, insbesondere bei solchen Getriebeapplikationen, die einen großen Bohrungsdurchmesser des Losrades zur Aufnahme einer Welle und eines Lagers besitzen. Bei hart geschweißten Kupplungskörpern mit derartigen Taschen besteht ferner häufig ein Festigkeitsproblem.

In einer zweiten Herstellungsvariante wird die Losradanordnung einstückig als "Monoblock" gefertigt, wobei die Kupplungskörperverzahnung sowie die Axialvertiefung direkt an einem Losradrohling ausgebildet werden.

Bei dieser Variante werden die Axialvertiefungen und die Kupplungskörperverzahnung durch ein kostenintensives Warmschmiedeverfahren ausgebildet. Dennoch kann bei dieser Herstellungsart die Genauigkeit der Verzahnung, insbesondere die Spitzen an den Zahndächern, nicht so hoch sein wie bei zerspanenden Schlagzahn- oder Stoßverfahren oder wie beim Feinschneiden zum Ausbilden der Kupplungskörperverzahnung.

Vor diesem Hintergrund ist es eine Aufgabe der Erfindung, ein verbessertes Verfahren zum Herstellen einer Losradanordnung, eine so hergestellte Losradanordnung sowie eine Schaltkupplungsanordnung mit einer solchen Losradanordnung anzugeben.

Diese Aufgabe wird gemäß einem ersten Aspekt der vorliegenden Erfindung gelöst durch ein Verfahren zum Herstellen einer Losradanordnung für eine Schaltkupplungsanordnung, wobei die Losradanordnung ein Losrad mit einer Losradverzahnung sowie einen Kupplungskörper mit einer Kupplungskörperverzahnung aufweist und wobei die Losradanordnung wenigstens eine Axialvertiefung zur Aufnahme eines Abschnittes eines Ringelementes der Schaltkupplungsanordnung aufweist, mit den Schritten, einen Losradrohling und eine Kupplungskörperanordnung bereitzustellen, die Axialvertiefung in den Losradrohling einzubringen und die Kupplungskörperanordnung an dem Losradrohling festzulegen.

Gemäß einem zweiten Aspekt der vorliegenden Erfindung wird die obige Aufgabe gelöst durch ein Verfahren zum Herstellen einer Losradanordnung für eine Schaltkupplungsanordnung, wobei die Losradanordnung ein Losrad mit einer Losradverzahnung sowie einen Kupplungskörper mit einer Kupplungskörperverzahnung aufweist und wobei die Losradanordnung wenigstens eine Axialvertiefung zur Aufnahme eines Abschnittes eines Ringelementes der Schaltkupplungsanordnung aufweist, mit den Schritten, einen Losradrohling und eine Kupplungskörperanordnung bereitzustellen, wobei die Kupplungskörperanordnung einen äußeren Kupplungskörperring und einen inneren Kupplungskörperring aufweist, die Axialvertiefung in einen der Kupplungskörperringe einzubringen und die Kupplungskörperanordnung an dem Losradrohling festzulegen.

Ferner wird die obige Aufgabe gelöst durch ein Verfahren zum Herstellen einer Schaltkupplungsanordnung, die einen Konusring mit wenigstens einer Reibfläche und wenigstens einem axial vorstehenden Vorsprung sowie eine Losradanordnung mit einem Kupplungskörper aufweist, wobei die Losradanordnung wenigstens eine Axialvertiefung aufweist, mit den Schritten, eine Losradanordnung gemäß einem der oben beschriebenen Verfahren herzustellen und anschließend den Vorsprung in die Axialvertiefung einzusetzen, um die Losradanordnung und den Konusring in Umfangsrichtung formschlüssig miteinander zu verbinden.

Ferner wird die obige Aufgabe gelöst durch eine Losradanordnung für eine Schaltkupplungsanordnung, wobei die Losradanordnung insbesondere gemäß einem der oben beschriebenen Verfahren hergestellt ist und wobei die Losradanordnung ein Losrad mit einer Losradverzahnung sowie einen Kupplungskörper mit einer Kupplungskörperverzahnung aufweist, wobei die Losradanordnung wenigstens eine Axialvertiefung zur Aufnahme eines Abschnittes eines Ringelementes der Schaltkupplungsanordnung aufweist, wobei das Losrad und der Kupplungskörper separat voneinander hergestellt und über eine zumindest in Umfangsrichtung feste Verbindung wie eine Steck- oder Schweißverbindung miteinander verbunden sind und wobei die Axialvertiefung in dem Losrad oder in einem von zwei Kupplungskörperringen des Kupplungskörpers ausgebildet ist.

Schließlich wird die obige Aufgabe gelöst durch eine Schaltkupplungsanordnung, insbesondere für Kraftfahrzeuggetriebe, mit einer Losradanordnung der oben beschriebenen Art.

Durch die vorliegende Erfindung werden vorzugsweise die Nachteile der eingangs genannten Verfahren des Standes der Technik eliminiert, und die Vorteile beider Varianten werden miteinander kombiniert.

Zum einen können die Axialvertiefungen durch ein kostengünstiges Verfahren in den Losradrohling oder in den einen Kupplungskörperring eingebracht werden.

Bei der Ausführungsform, bei der die Axialvertiefung in den Losradrohling eingebracht wird, kann diese im Wesentlichen kostenneutral geformt werden. Bei dieser Variante kann ferner der Kupplungsring als einfaches ringförmiges Bauteil vorgesehen werden, dessen Kupplungskörperverzahnung spanlos oder spanend (beispielsweise durch Schlagzahnfräsen oder durch Prägen oder durch Feinschneiden) hergestellt werden kann.

Insbesondere kann durch die Erfindung jedoch erreicht werden, dass der Durchmesser, an dem die Kupplungskörperanordnung mit dem Losrad verbunden wird (beispielsweise durch Schweißen oder durch eine Steckverzahnung), gegenüber dem Stand der Technik vergrößert wird. Hierdurch kann die Verbindungslänge in Umfangsrichtung insbesondere gegenüber solchen Losradanordnungen des Standes der Technik vergrößert werden, bei denen der Kupplungskörper am Innenumfang offene Taschen aufweist. Durch diese Maßnahme kann eine höhere Festigkeit der Verbindung zwischen Kupplungskörperanordnung und Losrad erzielt werden. Hierdurch können die übertragbaren Drehmomente und/oder die Funktionssicherheit erhöht werden.

Bei der Variante mit zwei Kupplungskörperringen kann die Kupplungskörperverzahnung an dem einen Kupplungskörperring ausgebildet werden, insbesondere an dem äußeren Kupplungskörperring. Der andere Kupplungskörperring kann dabei die Axialvertiefung aufweisen. Hierdurch kann das Herstellungsverfahren für jeden einzelnen der Kupplungskörperringe deutlich vereinfacht und damit kostengünstiger gestaltet werden.

Die Aufgabe wird somit vollkommen gelöst.

Gemäß einer besonders bevorzugten Ausführungsform erfolgt das Einbringen der Axialvertiefung durch Ur- oder Umformung, insbesondere durch Kaltschmieden, des Losradrohlings oder des einen Kupplungskörperrings. Vorzugsweise erfolgt das Einbringen der Axialvertiefung folglich durch ein spanloses Herstellungsverfahren.

Insbesondere bei der Variante, bei der die Axialvertiefung in den Losradrohling eingebracht wird, kann dieser Schritt erfolgen, bevor der Losradrohling gehärtet wird. Ferner kann das Einbringen der Axialvertiefung im Wesentlichen in einem Arbeitsschritt mit dem Bereitstellen des Losradrohlings erfolgen, durch Urformen wie Giessen oder durch Umformen wie Warm- oder Kaltverformen, insbesondere durch Kaltschmieden.

Gleiches gilt für die Herstellung des einen Kupplungskörperrings, wenn die Axialvertiefung in diesen eingebracht wird.

Gemäß einer weiteren bevorzugten Ausführungsform des ersten Aspektes der vorliegenden Erfindung wird der Losradrohling mit einem Nabenabschnitt bereitgestellt, an dem die Axialvertiefung eingebracht wird.

Bei dieser Ausführungsform kann das Einbringen der Axialvertiefung besonders effizient erfolgen, insbesondere durch Kaltschmieden.

Bei beiden Aspekten der vorliegenden Erfindung ist es von Vorteil, wenn die Axialvertiefung derart an dem Losradrohling oder an dem einen Kupplungskörperring eingebracht wird, dass die Axialvertiefung zu einem Umfangsabschnitt des Losradrohlings oder des einen Kupplungskörperrings hin offen ist.

Diese Ausgestaltung eignet sich insbesondere, wenn der Losradrohling bzw. der Kupplungskörperring kaltverformt bzw. kaltgeschmiedet werden.

Insgesamt ist es bei beiden Aspekten der vorliegenden Erfindung ferner vorteilhaft, wenn die Kupplungskörperanordnung an einem Umfangsabschnitt eines Nabenabschnittes des Losradrohlings festgelegt wird.

Das Festlegen erfolgt bei dem ersten Aspekt der vorliegenden Erfindung dadurch, dass der einstückige Kupplungskörper an dem Umfangsabschnitt festgelegt wird. Bei dem zweiten Aspekt der vorliegenden Erfindung wird insbesondere der eine Kupplungskörperring, an dem die Axialvertiefung ausgebildet worden ist, an dem Umfangsabschnitt des Nabenabschnittes des Losradrohlings festgelegt.

Dabei ist es von besonderem Vorzug, wenn die Kupplungskörperanordnung oder der andere Kupplungskörperring die Axialvertiefung radial verschließt.

Hierbei wird die Axialvertiefung in radialer Richtung sowohl nach innen als auch nach außen hin begrenzt, so dass eine sichere Verbindung des Ringelementes mit der Losradanordnung in Umfangsrichtung erfolgen kann.

Gemäß einer alternativen Ausführungsform wird die Axialvertiefung bei dem ersten Aspekt der vorliegenden Erfindung derart an dem Losradrohling eingebracht, dass die Axialvertiefung zu einem Umfangsabschnitt des Losradrohlings hin geschlossen ist.

Bei dieser Ausführungsform ist es von Vorteil, dass der Umfangsabschnitt des Losradrohlings über seinen gesamten Umfang zur Verbindung mit der Kupplungskörperanordnung ausgelegt sein kann, insbesondere mit einem einstückigen Kupplungskörper.

Hierbei kann das Verbinden des Kupplungskörpers mit dem Umfangsabschnitt des Losradrohlings (beispielsweise eines Nabenabschnittes) insbesondere dadurch erfolgen, dass die Verbindung über den gesamten Umfang des Umfangsabschnittes hin durchgehend ist. Dies kann beispielsweise durch eine Schweißverbindung über den ganzen Umfang in einem Stück erfolgen.

Bei Herstellen einer Schweißverbindung wird insbesondere das Laserschweißen angewandt. Dies kann insbesondere auch dann angewandt werden, wenn der Losradrohling und/oder der Kupplungskörper bereits gehärtet sind.

Bei sämtlichen Ausführungsformen wird die Kupplungskörperverzahnung vorzugsweise durch ein spanendes Verfahren hergestellt, insbesondere durch ein Schlagzahn- oder Stoßverfahren oder durch ein Feinschneiden. Hierdurch können deutlich genauere Verzahnungen hergestellt werden als dies beim kostenintensiven Warmschmieden möglich ist.

Es versteht sich, dass auch die Losradverzahnung vorzugsweise spanend hergestellt wird.

Es versteht sich ferner, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Draufsicht auf eine erste Ausführungsform einer erfindungsgemäßen Losradanordnung in axialer Richtung;
- Fig. 2: eine schematische Schnittansicht entlang der Linie II-II der Fig. 1;
- Fig. 3: eine schematische Teildarstellung einer erfindungsgemäßen Schaltkupplungsanordnung;
- Fig. 4: eine schematische Darstellung einer weiteren Ausführungsform einer Losradanordnung, die gemäß dem ersten Aspekt der vorliegenden Erfindung hergestellt ist; und
- Fig. 5: eine schematische Längsschnittansicht durch eine weitere Ausführungsform einer Losradanordnung, die gemäß dem zweiten Aspekt der vorliegenden Erfindung hergestellt ist.

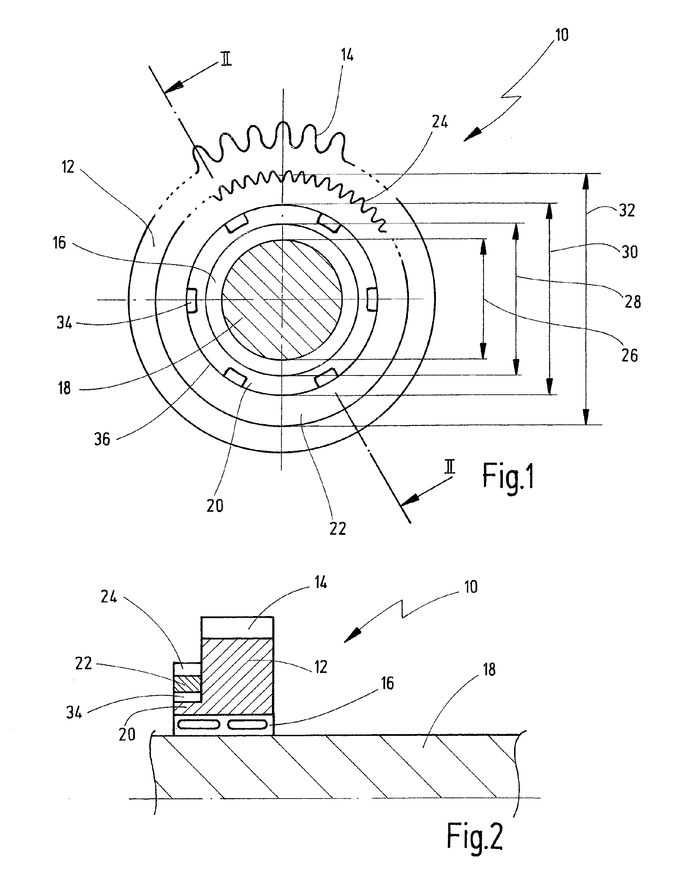

In den Fig. 1 und 2 ist eine erste Ausführungsform einer Losradanordnung dargestellt, die gemäß dem ersten Aspekt der vorliegenden Erfindung hergestellt ist.

Die Losradanordnung ist in den Fig. 1 und 2 generell mit 10 bezeichnet und beinhaltet ein Losrad (Schaltrad) 12, an dessen Außenumfang eine Losradverzahnung 14 ausgebildet ist. Die Losradverzahnung 14 kann als Geradverzahnung ausgebildet sein, insbesondere ist sie als Schrägverzahnung ausgebildet und dazu ausgelegt, mit einer entsprechenden Verzahnung eines Festrades in Eingriff zu treten.

Das Losrad 12 ist mittels eines Losradlagers 16 drehbar an einer Welle 18 gelagert.

Das Losrad 12 weist einen in axialer Richtung vortretenden Nabenabschnitt 20 auf, an dessen Außenumfang ein Kupplungskörper 22 festgelegt ist (der bspw. als Kupplungsscheibe oder Kupplungsring ausgebildet sein kann). Der Kupplungskörper 22 weist an seinem Außenumfang eine Kupplungskörperverzahnung 24 auf, die dazu ausgelegt ist, mit einer Innenverzahnung einer Schaltmuffe in Eingriff zu treten. Die Kupplungskörperverzahnung 24 ist als Axialverzahnung ausgebildet.

Der Durchmesser der Welle 18 ist in Fig. 1 mit 26 bezeichnet. Der Innendurchmesser des Losrades 12 ist in Fig. 1 mit 28 bezeichnet. Der Außendurchmesser des Nabenabschnittes 20 ist in Fig. 1 mit 30 bezeichnet. Der Außendurchmesser des Kupplungskörpers 22 ist in Fig. 1 mit 32 bezeichnet.

An dem Außenumfang des Nabenabschnittes 20 ist die Mehrzahl (vorliegend sechs) von Axialvertiefungen 34 ausgebildet. Die Axialvertiefungen 34 sind jeweils zum Außenumfang des Nabenabschnittes 20 hin offen und sind in diesem Bereich durch den Innenumfang des Kupplungskörpers 22 abgedeckt. Hierdurch sind die Axialvertiefungen 34 sowohl in radialer Richtung als auch in Umfangsrichtung geschlossen.

Die Losradanordnung 10 wird vorzugsweise wie folgt hergestellt. In einer Variante können das Losrad 12 und der Kupplungskörper 14 getrennt voneinander weich bereitgestellt und anschließend miteinander verbunden (z.B. geschweißt) sowie schließlich gemeinsam gehärtet werden. Alternativ können das Losrad 12 und der Kupplungskörper 14 getrennt voneinander hergestellt und gehärtet werden, wobei die Bauteile zum Herstellen einer Schweißverbindung ggf. zunächst an der aufgekohlten Zone hartgedreht (einsatzfrei gedreht) und anschließend verschweißt werden.

In beiden Varianten wird zunächst ein Losradrohling durch Ur- oder Umformen bereitgestellt, vorzugsweise durch eine Kaltverformung, wobei die Axialvertiefungen 34 an dem Nabenabschnitt 20 mit eingeformt werden. Die Kaltverformung erfolgt vorzugsweise durch Kaltschmieden. Anschließend kann die Losradverzahnung hergestellt werden, vorzugsweise durch ein präzises spanendes Verfahren.

Bei der zweiten Variante kann der Losradrohling dann gehärtet werden. Gegebenenfalls kann der Außenumfang des Nabenabschnittes 20 nachgedreht werden, insbesondere dann, wenn der Kupplungskörper 22 durch eine Schweißverbindung mit dem Nabenabschnitt 20 zu verbinden ist, wie es in Fig. 1 bei 36 gezeigt ist.

Ferner wird der Kupplungskörper in beiden Varianten in einem Stück gefertigt, indem zunächst ein Rohling durch Ur- oder Umformung hergestellt wird. Anschließend wird die Kupplungskörperverzahnung 24 spanend und mit hoher Präzision am Außenumfang des Kupplungskörpers fertiggestellt. Bei der zweiten Variante kann der Kupplungskörper anschließend gehärtet werden. Der Innenumfang des Kupplungskörpers 22 kann, wenn bspw. eine Verbindung mit dem Nabenabschnitt 20 durch Schweißen erfolgt, nach dem Härten rundgedreht werden.

Alternativ zum Schweißen können der Kupplungskörper 22 und das Losrad 12 über eine Steckverzahnung miteinander verbunden werden. Hierbei werden am Außenumfang des Nabenabschnittes 20 und am Innenumfang des Kupplungskörpers 22 Verzahnungen ausgebildet. Dies erfolgt vorzugsweise ebenfalls vor dem Härten dieser Bauteile.
Zur drehfesten Verbindung des Kupplungskörpers 22 und des Losrades 12 wird der Kupplungskörper 22 dann in axialer Richtung auf die Verzahnung des Nabenabschnittes 20 aufgeschoben.

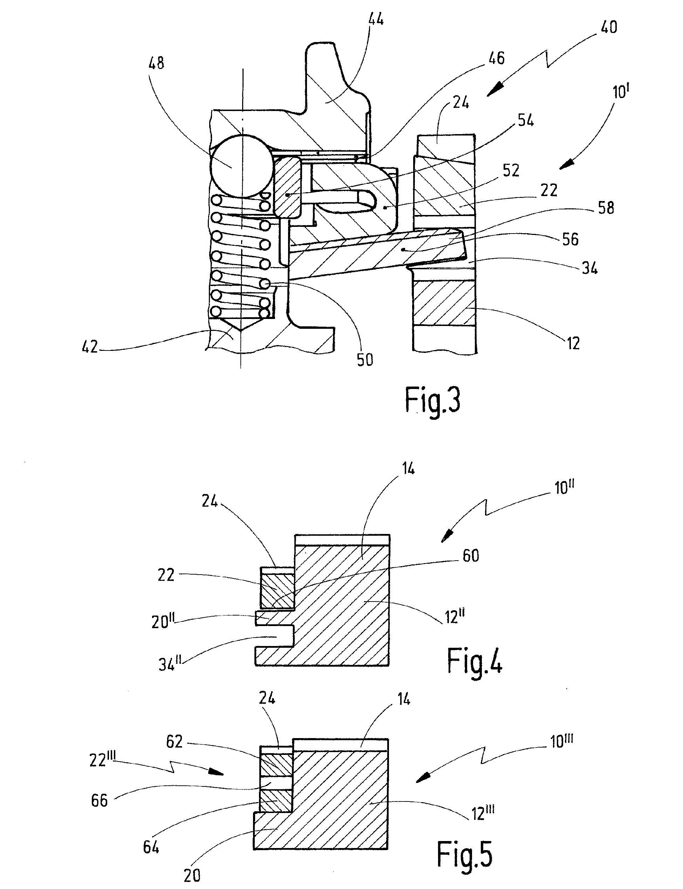

Fig. 3 zeigt eine bevorzugte Ausführungsform einer Schaltkupplungsanordnung 40, die als gesteckte Monokegelsynchronisierung ausgebildet ist.

Die Schaltkupplungsanordnung 40 weist eine Führungsmuffe 42 auf, die drehfest mit der Welle 18 verbindbar ist (beispielsweise durch eine Steckverzahnung). Ferner beinhaltet die Schaltkupplungsanordnung 40 eine Schaltmuffe 44, die über eine Verzahnung in Umfangsrichtung drehfest mit der Führungsmuffe 42 verbunden ist und in axialer Richtung (in Fig. 3 nach links bzw. rechts) verschieblich an der Führungsmuffe 42 gelagert ist. Die Schaltmuffe 44 weist hierzu an ihrem Innenumfang eine Schaltmuffenverzahnung 46 auf, die mit einer nicht näher bezeichneten Führungsmuffenverzahnung in Eingriff steht.

Zur Rastierung und/oder zur Ansynchronisierung ist eine Kugel 48 vorgesehen, die mittels einer Feder 50 radial nach außen in eine Rastvertiefung der Schaltmuffe 44 gedrückt wird.

Die Schaltkupplungsanordnung 40 beinhaltet ferner einen Synchronring 52, an dessen Innenumfang ein konischer Reibabschnitt ausgebildet ist. Zwischen dem Synchronring 52 und der Führungsmuffe 42 ist ein Andruckstück 54 vorgesehen.

Schließlich beinhaltet die Schaltkupplungsanordnung 40 einen Konusring 56, der an seinem Außenumfang einen konischen Reibabschnitt aufweist, der mit dem Reibabschnitt des Synchronringes 52 in Eingriff steht. Der Konusring 56 weist eine Mehrzahl von axialen Vorsprüngen 58 auf. Zur Herstellung der Schaltkupplungsanordnung 40 werden die Vorsprünge 58 in die Axialvertiefungen 34 einer Losradanordnung eingeführt, um die Losradanordnung in Umfangsrichtung formschlüssig mit dem Konusring 56 zu verbinden. Die Schaltkupplungsanordnung 40 beinhaltet bei der Ausführungsform der Fig. 3 eine Losradanordnung 10', die hinsichtlich Aufbau und Funktionsweise generell der Losradanordnung 10 der Fig. 1 und 2 entspricht. Gleiche Elemente sind daher durch gleiche Bezugszeichen gekennzeichnet. Man erkennt, dass die Kupplungskörperverzahnung 24 radial auf gleicher Höhe wie die Schaltmuffenverzahnung 46 liegt, so dass durch axiales Verschieben der Schaltmuffe 44 die Schaltmuffenverzahnung 46 in die Kupplungskörperverzahnung 24 greift, um auf diese Weise die Losradanordnung 10' drehfest mit der Welle 18 zu verbinden, die drehfest mit der Führungsmuffe 42 verbunden ist.

In Fig. 4 ist eine weitere Ausführungsform einer Losradanordnung 10" gezeigt, die gemäß dem ersten Aspekt der vorliegenden Erfindung hergestellt ist.

Bei dieser Ausführungsform sind die Axialvertiefungen 34" axial in einen Nabenabschnitt 20" des Losrades 12" eingebracht, derart, dass die Axialvertiefung zu einem Umfangsabschnitt des Nabenabschnittes 20" hin geschlossen ist. Mit anderen Worten ist der Außenumfang des Nabenabschnittes 20" in Umfangsrichtung durchgehend ausgebildet. Hierdurch kann eine Verbindung zwischen dem Außenumfang des Nabenabschnittes 20" und dem Innenumfang des Kupplungskörpers 22 erfolgen, indem eine Schweißverbindung in einem Stück umlaufend durchgeschweißt wird. Hierbei können die Axialvertiefungen 34" geschmiedet werden, wobei die Außenverzahnung des Kupplungskörpers 14 präzise durch spanende oder feinschneidende Bearbeitung hergestellt werden kann.

Alternativ hierzu ist es möglich, den Kupplungskörper 20 und den Außenumfang des Nabenabschnittes 20" über eine Steckverbindung miteinander zu verbinden, wie es in Fig. 4 schematisch bei 60 angedeutet ist.

Fig. 5 zeigt eine weitere Ausführungsform einer Losradanordnung 10"', die gemäß dem zweiten Aspekt der vorliegenden Erfindung hergestellt ist.

Hierbei ist die Kupplungskörperanordnung 22'" gebildet durch zwei separate Kupplungskörperringe 62, 64.

Der Kupplungskörperring 62 ist ein äußerer Ring, an dessen Außenumfang die Kupplungskörperverzahnung 24 ausgebildet ist. Der Kupplungskörperring 64 ist ein innerer Kupplungskörperring, dessen Innenumfang mit dem Außenumfang eines Nabenabschnittes 20 des Losrades 12'" verbunden ist (beispielsweise durch eine Steck- oder Schweißverbindung).

Am Außenumfang des inneren Kupplungskörperringes 64 ist eine Mehrzahl von Axialvertiefungen 66 eingebracht, deren Aufbau und Ausgestaltung jener der Axialvertiefungen 34 der Fig. 1 und 2 entsprechen kann. Der äußere Kupplungskörperring 62 ist an seinem Innenumfang mit dem Umfang des inneren Kupplungskörperringes 64 durch eine Steck- oder Schweißverbindung verbunden.

Insbesondere die Ausführungsformen der Fig. 1 bis 4 sind dahingehend vorteilhaft, dass der Durchmesser 30, auf dem der Kupplungskörper 22 und das Losrad 12 miteinander verbunden werden, relativ groß ist, so dass die Verbindungslänge in Umfangsrichtung gesehen relativ groß sein kann. Hierdurch kann eine hohe Festigkeit der Verbindung in Umfangsrichtung erzielt werden (sowohl bei einer Steck- als auch bei einer Schweißverbindung).

Die Ausführungsform der Fig. 5 ist insbesondere wegen der einfachen Herstellungsart vorteilhaft.

Sowohl die Axialvertiefungen 34 der Fig. 1 bis 3 als auch die Axialvertiefungen 34" der Fig. 4 können durch Kaltumformen während der Herstellung eines Losradrohlings in einem Schritt mit eingeformt werden. In entsprechender Weise können die Axialvertiefungen 66 bei Herstellen eines Rohlings für den inneren Kupplungskörperring 64 durch Kaltverformung in einem Arbeitsgang mit hergestellt werden.

## Patentansprüche

1. Verfahren zum Herstellen einer Losradanordnung (10) für eine Schaltkupplungsanordnung (40), wobei die Losradanordnung (10) ein Losrad (12) mit einer Losradverzahnung (14) sowie einen Kupplungskörper (22) mit einer Kupplungskörperverzahnung (24) aufweist, und wobei die Losradanordnung (10) wenigstens eine Axialvertiefung (34) zur Aufnahme eines Abschnittes (58) eines Ringelementes (56) der Schaltkupplungsanordnung (40) aufweist, mit den Schritten:
- Bereitstellen eines Losradrohlinges und einer Kupplungskörperanordnung;
- Einbringen der Axialvertiefung in den Losradrohling; und
- Festlegen der Kupplungskörperanordnung an dem Losradrohling.

2. Verfahren zum Herstellen eine Losradanordnung (10"') für eine Schaltkupplungsanordnung (40), wobei die Losradanordnung (10"') ein Losrad (12"') mit einer Losradverzahnung (14) sowie einen Kupplungskörper (22"') mit einer Kupplungskörperverzahnung (24) aufweist, und wobei die Losradanordnung (10"') wenigstens eine Axialvertiefung (66) zur Aufnahme eines Abschnittes (58) eines Ringelementes (56) der Schaltkupplungsanordnung (40) aufweist, mit den Schritten:
- Bereitstellen eines Losradrohlinges und einer Kupplungskörperanordnung, die einen äußeren Kupplungskörperring (62) und einen inneren Kupplungskörperring (64) aufweist;
- Einbringen der Axialvertiefung (66) in einen der Kupplungskörperringe (64); und
- Festlegen der Kupplungskörperanordnung an dem Losradrohling.

3. Verfahren nach Anspruch 1 oder 2, wobei das Einbringen der Axialvertiefung (34; 66) durch Ur- oder Umformung, insbesondere durch Kaltschmieden, des Losradrohlings oder des einen Kupplungskörperrings (64) erfolgt.

4. Verfahren nach Anspruch 1 oder 3, wobei der Losradrohling mit einem Nabenabschnitt (20) bereitgestellt wird, an dem die Axialvertiefung (34) eingebracht wird.

5. Verfahren nach einem der Ansprüche 1 bis 4, wobei die Axialvertiefung (34; 66) derart an dem Losradrohling oder an dem einen Kupplungskörperring (64) eingebracht wird, dass die Axialvertiefung (34; 66) zu einem Umfangsabschnitt des Losradrohlings oder des einen Kupplungskörperrings (64) hin offen ist.

6. Verfahren nach einem der Ansprüche 1 bis 5, wobei die Kupplungskörperanordnung (22) an einem Umfangsabschnitt eines Nabenabschnittes (20) des Losradrohlings festgelegt wird.

7. Verfahren nach Anspruch 5 und 6, wobei die Kupplungskörperanordnung (22) oder der andere Kupplungskörperring (62) die Axialvertiefung radial verschließt.

8. Verfahren nach einem der Ansprüche 1 bis 4, wobei die Axialvertiefung (34") derart an dem Losradrohling eingebracht wird, dass die Axialvertiefung (34") zu einem Umfangsabschnitt des Losradrohlings hin geschlossen ist.

9. Verfahren zum Herstellen einer Schaltkupplungsanordnung (40), die einen Konusring (56) mit wenigstens einer Reibfläche und wenigstens einem axial vorstehenden Vorsprung (58) sowie eine Losradanordnung (10) mit einem Kupplungskörper (22) aufweist, die wenigstens eine Axialvertiefung (34; 66) aufweist, mit den Schritten, eine Losradanordnung (10) gemäß dem Verfahren nach einem der Ansprüche 1 bis 8 herzustellen und anschließend den Vorsprung (58) in die Axialvertiefung (34; 66) einzusetzen, um die Losradanordnung (10) und den Konusring (56) in Umfangsrichtung formschlüssig miteinander zu verbinden.

10. Losradanordnung (10) für eine Schaltkupplungsanordnung (40), insbesondere hergestellt gemäß einem Verfahren nach einem der Ansprüche 1 bis 8, wobei die Losradanordnung (10) ein Losrad (12) mit einer Losradverzahnung (14) sowie einen Kupplungskörper (22) mit einer Kupplungskörperverzahnung (24) aufweist, wobei die Losradanordnung (10) wenigstens eine Axialvertiefung (34; 66) zur Aufnahme eines Abschnittes (58) eines Ringelementes (56) der Schaltkupplungsanordnung (40) aufweist,
wobei das Losrad (12) und der Kupplungskörper (22) separat voneinander hergestellt und über eine zumindest in Umfangsrichtung feste Verbindung wie eine Steck- oder Schweißverbindung (36; 60) miteinander verbunden sind und wobei die Axialvertiefung (34; 66) in dem Losrad (12) oder in einem (64) von zwei Kupplungskörperringen (62, 64) des Kupplungskörpers (22) ausgebildet ist.

11. Schaltkupplungsanordnung (40), insbesondere für Kraftfahrzeuggetriebe, mit einer Losradanordnung (10) nach Anspruch 10.
